**Europäisches Patentamt**

**European Patent Office**

**Office européen des brevets**

(19)

(11) Veröffentlichungsnummer: **0 161 613**
**A2**

# (12) EUROPÄISCHE PATENTANMELDUNG

(21) Anmeldenummer: **85105511.1**

(22) Anmeldetag: **06.05.85**

(51) Int. Cl.⁴: **G 01 N 1/20**

(30) Priorität: **07.05.84 DE 3416821**

(43) Veröffentlichungstag der Anmeldung: **21.11.85**
**Patentblatt 85/47**

(84) Benannte Vertragsstaaten: **AT BE CH DE FR GB IT LI NL SE**

(71) Anmelder: **Hecht, Günther, Dr.-Scharl-Strasse 8, D-8068 Pfaffenhofen/Ilm (DE)**

(72) Erfinder: **Hecht, Günther, Dr.-Scharl-Strasse 8, D-8068 Pfaffenhofen/Ilm (DE)**

(74) Vertreter: **WILHELMS, KILIAN & PARTNER Patentanwälte, Eduard-Schmid-Strasse 2, D-8000 München 90 (DE)**

(54) **Probennehmer und Verfahren zur Entnahme von Schüttgutproben.**

(57) Bei einem Probennehmer zur Entnahme von Proben aus einem Fallstrom von Schüttgutteilchen, mit einer im wesentlichen horizontalen im Fallbereich befindlichen Auffangrinne (16) für die Schüttgutteilchen, in welcher eine Förderschnecke (10) angeordnet ist, wobei die Förderschnecke so antreibbar ist, daß in der Auffangrinne aufgefangene Teilchen zu einem an ein Ende der Auffangrinne anschließenden Probenauslaß (9) befördert werden, ist zum Zwecke der einfachen Entfernung von unerwünscht aufgefangenem und nicht die Zusammensetzung des Schüttguts zum Zeitpunkt der Probenentnahme repräsentierendem Schüttgut von der Auffangrinne vorgesehen, daß die Förderschnecke (10) ferner in umgekehrter Richtung antreibbar ist und daß aufgefangene Schüttgutteilchen an dem dem Probenauslaß (9) abgekehrten Ende der Auffangrinne (16) von der Auffangrinne abführbar sind.

- 1 -

Beschreibung

Die Erfindung bezieht sich auf einen Probennehmer zur Entnahme von Proben aus einem Fallstrom von Schüttgutteilchen gemäß Oberbegriff des Anspruchs 1.Ferner betrifft die Erfindung ein Verfahren zur Entnahme von Proben aus einem Fallstrom von Schüttgutteilchen gemäß Oberbegriff des Patentanspruchs 5.

Die Entnahme von Proben mit einem derartigen Probennehmer bzw. nach einem derartigen Verfahren erfolgt, etwa zur Überprüfung einer gleichbleibenden Zusammensetzung oder Konsistenz des Schüttgutes,in der Regel nicht dauernd, sondern in bestimmten zeitlichen Abständen. Hierbei ergibt sich das Problem, daß sichergestellt sein muß, daß der Auffänger bei jeder Probenentnahme nur solche Schüttgutteilchen enthält, die zum Zeitpunkt der Probenentnahme aufgefangen wurden. Nach einer bekannten Lösung wird hierzu zur Entfernung von vor der  Probenentnahme aufgefangenem Schüttgut aus der Auffangrinne diese geschwenkt, das darin enthaltene Schüttgut also zunächst abgekippt. Eine solche Lösung erfordert jedoch einen nicht unerheblichen konstruktiven Aufwand, da sie Drehdurchführungen durch die Wand des das Schüttgut führenden Teils - eines Rohres, Tichters oder dergleichen - erfordert,was unter anderem Dichtungsprobleme mit sich bringt, da sichergestellt werden muß, daß das Schüttgut nicht durch die Drehdurchführung nach außen dringt. Außerdem muß für einen zusätzlichen Antrieb in Bezug auf die Schwenkbewegung gesorgt werden.

Aufgabe der Erfindung ist es daher, eine Vorrichtung und ein Verfahren anzugeben, mit welchem der Auffänger unter Umgehung der genannten Nachteile auf einfache Weise von unerwünscht aufgefangenem Schüttgut befreit werden kann.

Hinsichtlich der Vorrichtung wird diese Aufgabe erfindungsgemäß durch einem Probennehmer gelöst, wie er in An-

- 2 -

spruch 1 gekennzeichnet ist. Verfahrensmäßig wird diese Aufgabe durch ein Verfahren gelöst, wie es in Anspruch 5 gekennzeichnet ist.

Zweckmäßige Ausgestaltungen des erfindungsgemäßen Probennehmers sind Gegenstand der Unteransprüche 2 bis 4.

Ausführungsformen der Erfindung werden im folgenden in Verbindung mit der beigefügten Zeichnung beschrieben.

Fig. 1 zeigt einen Probennehmer mit Antrieb in teilweise geschnittener Seitenansicht in einer Ausführungsform für den Einbau in einem Fallrohr,

Fig. 2 zeigt eine ebensolche Darstellung eines Probennehmers für den Einbau in einen Trichter, und

Fig. 3 eine ebensolche Darstellung eines Probennehmers für den Anbau an einem mechanischen Förderorgan.

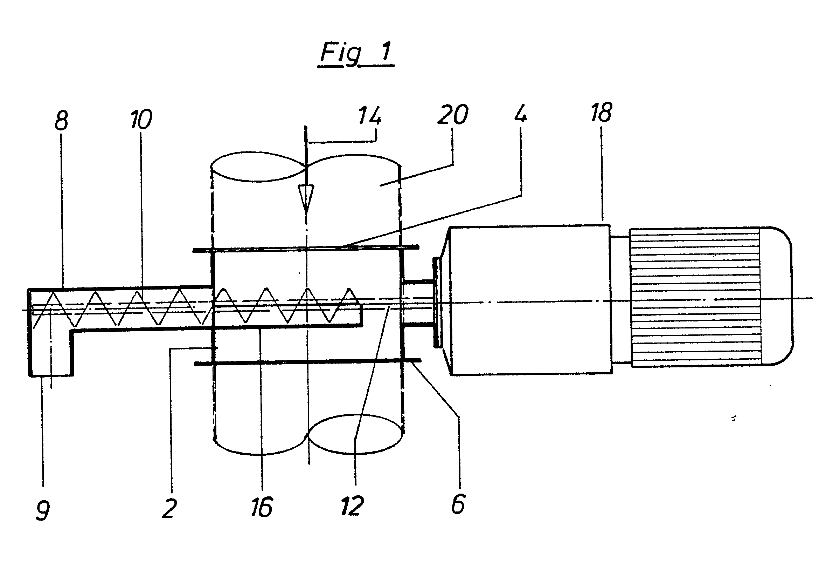

Gemäß Figur 1 weist der Probennehmer für den Einbau in ein (gestrichelt dargestelltes) Fallrohr 20 ein an beiden Enden mit einem Flansch 4 bzw. 6 versehenes Rohrstück 2 auf, an dessen Wand , etwa in radialer Richtung, ein Auslaßrohr 8 kleineren Durchmessers angeschlossen ist. In dieses Auslaßrohr 8 erstreckt sich koaxial mit ihm aus dem Rohrabschnitt 2 eine Förderschnecke 10, die über eine den Rohrabschnitt 2 in der Verlängerung der Förderschnecke durchsetzende Welle 12 durch einen Elektromotor 18 von außerhalb des Rohrabschnitts 2 angetrieben wird.

In der durch den Pfeil 14 angedeuteten Fallrichtung des Schüttguts gesehen unterhalb der Förderschnecke 10 befindet sich eine sich an die Förderschnecke 10 schmiegende Auffangrinne 16, die praktisch durch geeignetes Aufschneiden des ins Innere des Rohrabschnitts 2 fortgesetzten Rohres 8 gewonnen sein kann.

Wesentlich ist, daß die Auffangrinne 16 mit ihrem dem Auslaßrohr 8 abgekehrten Ende frei innerhalb der lichten Weite des Rohrabschnitts 2 endet.

- 3 -

Im Betrieb fällt durch das Fallrohr 20 bzw. den Rohrabschnitt 2 Schüttgut auf die Auffangrinne 16 und sammelt sich dort an, bis die Auffangrinne gefüllt ist. Später ankommendes Schüttgut rieselt dann von der gefüllten Auffangrinne ab.

Wollte man nun das in der Auffangrinne befindliche Schüttgut als Probe entnehmen, so wäre dieses für die Zusammensetzung bzw. Konsistenz des zum Zeitpunkt der Probenentnahme fließenden Schüttguts nicht repräsentativ.

Der Elektromotor 18 wird daher zunächst mit einer solchen Drehrichtung in Bewegung gesetzt, daß die durch ihn angetriebene Förderschnecke 10 das Schüttgut zum freien Ende der Rinne 16 hin befördert, von wo es aus der Auffangrinne 16 zurück in den Schüttgutstrom abfällt. Hierauf wird die Drehrichtung des Elektromotors 18 umgekehrt, so daß die Förderschnecke 10 nun das zu diesem Zeitpunkt auf die Auffangrinne 16 fallende Schüttgut als korrekte Probe durch das Auslaßrohr 8 zum Probenauslaß 9 befördert. Auf diese Weise ist allein mit den ohnehin vorhandenen Fördermitteln für die Entnahme der Probe eine Entleerung der Auffangrinne 16 vor der eigentlichen Probenentnahme möglich, ohne daß zusätzliche Maßnahmen für ein Verschwenken der Auffangrinne 16 notwendig wären.

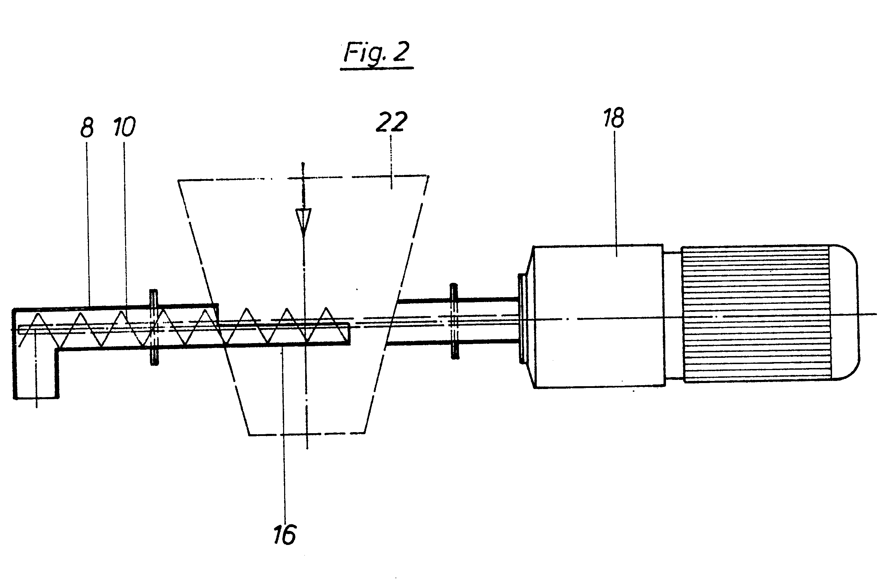

Figur 2 zeigt eine ähnliche Ausführungsform, bei der statt des Rohrabschnitts 2 ein Schütttrichter 22 vorgesehen ist. Der übrige Aufbau entspricht im wesentlichen dem von Figur 1. Auch hier ist von Bedeutung, daß die Auffangrinne 16 mit ihrem freien Ende innerhalb der lichten Öffnung des Schütttrichters 22 endet und daß der Elektromotor 18 die Förderschnecke in beiden Richtungen antreiben kann.

Sowohl in der Ausführungform der Figur 1 als auch der Ausführungsform der Figur 2 ist das Auslaßrohr 8 an seinem freien Ende nach unten abgewinkelt, sodaß der Probenauslaß 9 nach unten weist. In Figur 1 ist hierbei das Rohr einteilig ausgebildet, während in Figur 2 eine zweiteilige Ausführung mit gesondertem abgewinkelten Ende vorliegt.

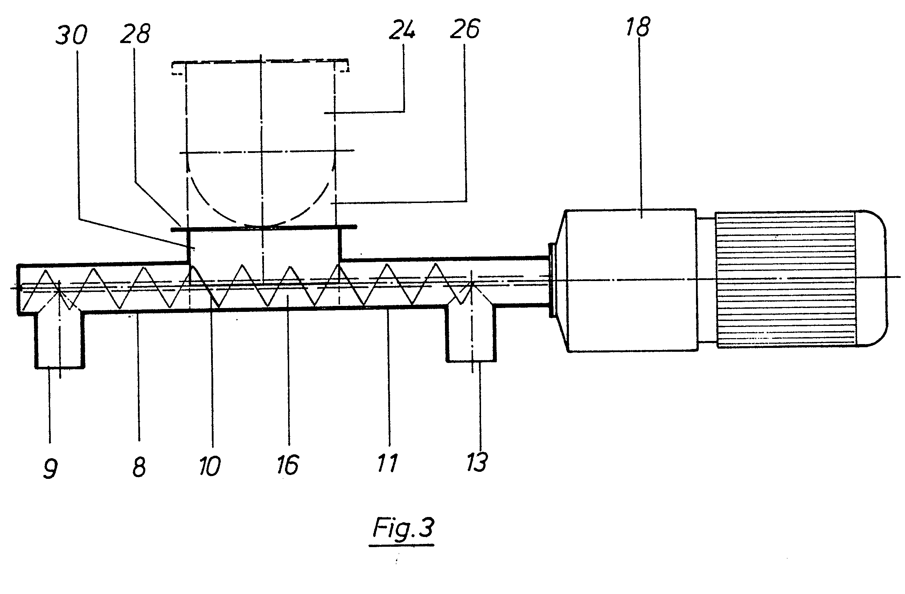

Die Ausführungsform des Probennehmers gemäß Figur 3 ist für einen Anbau an ein mechanisches Förderorgan eingerichtet. Dieses ist schematisch im oberen Teil der Figur 3 dargestellt, wobei die Förderrichtung senkrecht zur Zeichenebene zu verstehen ist und sich die Achse des zugehörigen Förderelements, etwa ebenfalls einer Förderschnecke, im Schnittpunkt des gestrichelt gezeigten Achsenkreuzes befindet. Das Förderorgan enthält einen schematisch bei 24 angedeuteten Förderkanal mit einem Anschlußstutzen 26, welcher über eine Flanschverbindung 28 mit einem ebensolchen Anschlußstutzen 30 des Probennehmers verbunden ist. Der Anschlußstutzen 30 des Probennehmers mündet in ein quer dazu verlaufendes Rohr, welches unterhalb des Anschlußstutzens 30 eine Auffangrinne 16 ausgebildet und sich beidseits des Anschlußstutzens 30 senkrecht dazu über diesen hinaus erstreckt. Die eine Rohrerstreckung entspricht dabei dem Auslaßrohr 8 der beiden anderen Ausführungsformen der Figuren 1 und 2 und mündet in einen Probenauslaß 9. Die bezüglich des Anschlußstutzens dazu symmetrisch liegende weitere Rohrerstreckung 11 mündet in einen weiteren Auslaß 13. In dem die Rohrerstreckungen 8 und 11 sowie die Rinne 16 umfassenden Querrohr erstreckt sich eine Förderschnecke 10 von dem Bereich des Probenauslasses 9 bis in den Bereich des anderen Auslasses 13. Sie wird in der gleichen Weise wie bei den Ausführungsformen der Figuren 1 und 2 über eine sie fortsetzende Welle durch einen in beiden Drehrichtungen betreibbaren Elektromotor 18 angetrieben.

Im Betrieb fällt Schüttgut aus dem Hauptförderstrom durch die Rohrstutzen 26 und 30 auf die Förderschnecke 10 und die Auffangrinne 16. Solange die Förderschnecke steht, beginnt sich irgendwann das aus dem Hauptförderstrom abgefallene Schüttgut über der Auffangrinne 16 zu stauen, so daß kein weiteres Schüttgut aus dem Hauptförderstrom mehr austritt. Soll eine Probe entnommen werden, so wird das gestaute Schüttgut durch geeignete Drehung des Elektromotors 18 mittels der Förderschnecke 10 zunächst zu dem weiteren Auslaß 13 bewegt und über diesen als Abfall verworfen. Das auf die Rinne 16 nachrückende Schüttgut entspricht in seiner Zusammensetzung bzw. Konsistenz dem gerade geförderten und wird mit umgekehrter Drehung des Elektromotors 18 mittels der Förderschnecke 10 durch das Auslaßrohr 8 zum Probenauslaß 9 bewegt und dort als Probe entnommen.

0161613

# WILHELMS KILIAN & PARTNER

PATENTANWÄLTE

EUROPEAN PATENT ATTORNEYS   EUROPAISCHE PATENTVERTRETER   MANDATAIRES EN BREVETS EUROPEENS

DR. RER NAT. ROLF E. WILHELMS
DR. RER NAT. HELMUT KILIAN
DR. ING. JURGEN SCHMIDT-BOGATZKY *

EDUARD-SCHMID-STRASSE 2
8000 MUNCHEN 90

TELEFON (089) 652091
TELEX 523467 (wilp-d)
TELEGRAMME PATRANS MUNCHEN
TELEFAX G3/G2 (089) 6516206

P 1857-EP

Günther Hecht

Pfaffenhofen/Ilm

## Probennehmer und Verfahren zur Entnahme von Schüttgutproben

Patentansprüche

1. Probennehmer zur Entnahme von Proben aus einem Fallstrom von Schüttgutteilchen, mit einer im wesentlichen horizontalen im Fallbereich befindlichen Auffangrinne (16) für die Schüttgutteilchen, in welcher eine Fördereinrichtung angeordnet ist, wobei die Fördereinrichtung so antreibbar ist, daß in der Auffangrinne aufgefangene Teilchen zu einem an ein Ende der Auffangrinne anschließenden Probenauslaß (9) gefördert werden, dadurch g e k e n n z e i c h n e t , daß die Fördereinrichtung ferner in umgekehrter Richtung antreibbar ist und daß aufgefangene Schüttgutteilchen an dem dem Probenauslaß (9) abgekehrten Ende der Auffangrinne (16) von der Auffangrinne abführbar sind.

2. Probennehmer nach Anspruch 1, dadurch g e k e n n - z e i c h n e t , daß die Fördereinrichtung eine Förderschnecke (10) ist.

- 2 -

3. Probennehmer nach Anspruch 2, dadurch g e k e n n -
z e i c h n e t , daß der Probenauslaß (9) an den Mantel eines
Fallrohrabschnitts (2) oder Schütttrichters (22) angeschlossen ist, daß sich Förderschnecke (10) und Auffangrinne (16)
quer durch den Fallrohrabschnitt oder Schütttrichter
erstrecken und daß die Auffangrinne auf der dem Probenauslaß abgekehrten Seite im lichten Bereich des Fallrohrabschnitts oder Schütttrichters endet.

4. Probennehmer nach Anspruch 2, dadurch   g e k e n n -
z e i c h n e t   , daß sich die Auffangrinne (16) quer unter einem Anschlußstutzen (30) erstreckt und an beiden Enden
außerhalb des Anschlußstutzens durch in Auslässen (9,13) endende Rohre (8,11) fortgesetzt wird und daß sich die Förderschnecke aus dem Bereich des einen Auslasses (9) über die
Auffangrinne (16) bis in den Bereich des anderen Auslasses
(13) erstreckt.

5. Verfahren zur Entnahme von Proben aus einem Fallstrom von Schüttgutteilchen, bei welchem Schüttgutteilchen
in einer im Fallstrom befindlichen Auffangrinne (16) aufgefangen und aus dieser zu einem Probenauslaß (9) gefördert
werden, wobei die Auffangrinne vor der Probenentnahme von vor
dem Entnahmezeitpunkt aufgefangenen Schüttgutteilchen entleert wird, dadurch   g e k e n n z e i c h n e t ,   daß die
Entleerung durch Umkehrung der Förderrichtung in der Auffangrinne (16) und Abfördern der aufgefangenen Schüttgutteilchen
von der Auffangrinne (16) nach der zum Probenauslaß (9) abgekehrten Seite hin durchgeführt wird.

Fig 1

## Fig. 2

_Fig.3_

P 1857-EP

0161613